(19) Europäisches Patentamt
European Patent Office
Office européen des brevets

(11) **EP 3 225 852 A1**

(12) **EUROPEAN PATENT APPLICATION**

(43) Date of publication:
04.10.2017 Bulletin 2017/40

(51) Int Cl.:
*F04D 19/02* (2006.01)        *F01D 5/14* (2006.01)
*F04D 29/32* (2006.01)        *F04D 29/68* (2006.01)

(21) Application number: 17158641.5

(22) Date of filing: 01.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.03.2016  GB 201605323

(71) Applicant: Rolls-Royce plc
London SW1E 6AT (GB)

(72) Inventor: Stieger, Rory
Derby, Derbyshire DE24 8BJ (GB)

(74) Representative: Rolls-Royce plc
Intellectual Property Dept SinA-48
PO Box 31
Derby DE24 8BJ (GB)

(54) **GAS TURBINE ENGINE FAN ASSEMBLY**

(57)    A fan assembly for a gas turbine engine (10). The assembly comprises a hub (22) and a plurality of blades (21) projecting from the hub (22). The hub (22) comprises an inlet aperture (30) located adjacent a blade root (26). The inlet aperture (30) is in fluid communication with a passage (31) extending along at least part of a span of the blade (21), and communicates with an outlet (34) provided on an exterior of the blade (21), radially outwardly of the inlet (30).

Figure 2

**Description**

The present disclosure concerns a gas turbine engine fan assembly, and a gas turbine engine comprising a fan assembly.

Turbofan engines comprise a fan and a core compressor. The fan is typically provided upstream of the compressor, and provides a portion of its exhaust air to the downstream compressor, with the remainder being bypassed around the compressor in a bypass duct. The fan comprises a plurality of blades attached to a hub. The compressor flow is drawn from the fan airflow adjacent the hub (also known as the "root" region). Air in this region comprises "clean" flow, which is substantially free from turbulence and travels in a generally axial direction, and "secondary flow". Generally, secondary flow comprises flow which travels in a direction non-parallel with the main flow. For example, flow adjacent the fan root (so-called "boundary layer flow") tends to be driven radially outwardly as it passes through the fan, before forming turbulent vortices. Compressors generally operate at higher efficiencies when ingesting clean air flow from an axial direction, rather than turbulent secondary flow.

Consequently, it is desirable to provide a fan assembly and a gas turbine engine configured to reduce delivery of secondary flow to downstream components.

According to a first aspect of the invention there is provided a fan assembly for a gas turbine engine, the assembly comprising:

    a hub and a plurality of blades projecting from the hub;
    wherein the hub comprises an inlet aperture located adjacent a blade root, the inlet aperture being in fluid communication with a passage extending along at least part of a span of the blade, wherein the passage communicates with an outlet provided on an exterior of the blade, radially outwardly of the inlet.

Advantageously, the inlet, passage and outlet provide a route for secondary air adjacent the hub, upstream of the blade root, thereby diverting the secondary flow away from the blade root. Since the passage extends through the interior of the blade, and extends in a radial direction, the blade acts as a centrifugal pump thereby energising the flow to draw in air flow, and increase its energy as it leaves the outlet.

The inlet may be provided adjacent one of a leading and a trailing edge of a blade root of one or more blades. A first inlet may be provided adjacent the leading edge of the blade root and a second inlet may be provided adjacent the trailing edge of the blade root.

The first inlet may be located axially forwardly of the leading edge of one or more blades at a circumferential position of the leading edge. Advantageously, secondary air is diverted from the leading edge of each fan blade. Alternatively or in addition, the first inlet may be provided circumferentially offset from the blade leading edges. The second inlet may be provided downstream of the first inlet. The second inlet may be provided in an inter-blade passage defined by opposing surfaces of adjacent blades. The second inlet may be provided downstream of a trailing edge of the blades.

The or each inlet may comprise one or more annular slots. Alternatively or in addition, the or each inlet may comprise a plurality of holes arranged in a generally circumferential extending row.

The outlet may be provided at a radial position such that, in use, air exiting from the outlet has a static pressure exceeding the static pressure of external air flow at the outlet.

The passage may extend in a generally radial direction, and the outlet may be provided adjacent a tip of the blade. Accordingly, the airflow from the passage may provide oppose tip leakage flows, thereby increasing the efficiency of the fan.

The outlet may be provided adjacent the leading edge of the respective blade, and may be provided at a pressure surface of the respective blade.

The outlet may comprise a slot, or may comprise a plurality of holes.

Alternatively, at least a portion of the passage may extend at least partially in an axial direction, and the outlet may be provided at a trailing edge of the respective blade.

Each respective blade may comprise a plurality of radially extending passages in fluid communication with the or each inlet. The radially extending passages may communicate with an axially extending outlet manifold.

The blades may comprise one or more of aluminium, titanium alloy and a composite material such as carbon fibre reinforced plastic (CFRP). Where the blades comprise titanium alloy, the blades may be formed by a superplastic diffusion bonding process (SPDFB).

The passage may extend within a hollow interior of the respective blade between the pressure and suction surfaces. Alternatively, the passage may comprise a blister located on a surface of the blade. The blister may extend from the pressure surface of the blade, or may extend from both the pressure and suction surface of the blade.

The blade may comprise a CFRP main body joined to a metallic leading edge. The passage may be located within one of the metallic leading edge, the CFRP main body, and the join between the leading edge and main body.

At least one of the inlets may comprise an inlet passage extending in a substantially axial direction. Consequently, the inlet passage ingests airflow into the inlet without significantly altering the flow direction of the secondary airflow. At least one of the inlets may comprise a vane which may project from the hub to guide air into the inlet.

The arrangement may comprise first and second inlets and an inlet manifold located within the blade hub, the inlet manifold being in fluid communication with the first and second inlets and at least one passage.

The outlet may be provided at a radial position of at least 30% of the span of the fan blade.

According to a second aspect of the present invention there is provided a gas turbine engine comprising a fan assembly in accordance with the first aspect of the invention.

The gas turbine engine may comprise a compressor having an air inlet located downstream of the fan assembly.

The gas turbine engine may comprise a bypass ratio greater than 10. At higher bypass ratios, a larger portion of the air entering the core will comprise secondary flow. Consequently, the compressor efficiency will be reduced, thereby negating some of the advantages of increased bypass ratio. The invention is therefore particularly beneficial at high bypass ratios, i.e. approximately 10 or greater.

The fan may have a pressure ratio in operation of between 1.2 and 1.6.

The outlet may be provided at a pressure surface of the blade, and may be configured to provide an outlet flow having a circumferential component directed toward an adjacent blade. Advantageously, flow from the outlet may oppose over-tip leakage flow, thereby reducing over-tip leakage, and enhancing fan efficiency, while also capturing secondary flow.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:

**Figure 1** is a sectional side view of a gas turbine engine;

**Figure 2** is a sectional side view of a first fan assembly suitable for the gas turbine engine of figure 1;

**Figure 3** is a sectional side view of a second fan assembly suitable for the gas turbine engine of figure 1;

**Figure 4** is a sectional side view of a third fan assembly suitable for the gas turbine engine of figure 1;

**Figure 5** is a sectional side view of a fourth fan assembly suitable for the gas turbine engine of figure 1;

**Figure 6** is a sectional side view of a fifth fan assembly suitable for the gas turbine engine of figure 1;

**Figure 7** is a sectional side view of a sixth fan assembly suitable for the gas turbine engine of figure 1

**Figure 8 is** a sectional top view of the first fan assembly of figure 2;

**Figure 9 is** a sectional top view of a seventh fan assembly;

**Figure 10** is a sectional top view of an eighth fan assembly;

**Figure 11** is a sectional side view a ninth fan assembly of figure 2;

**Figure 12** is a sectional side view of a tenth fan assembly;

**Figure 13** is a perspective view from a tip of a fan blade of an eleventh fan assembly; and

**Figure 14** is a perspective view of a tip portion of the fan assembly of figure 13.

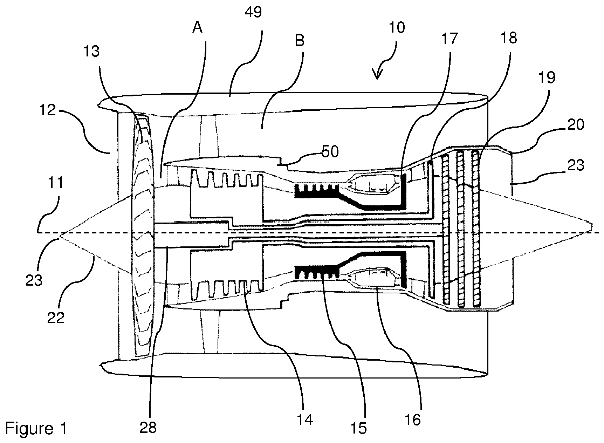

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 49 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow A into the intermediate pressure compressor 14 and a second air flow B which passes through a bypass duct defined by an internal space between a radially inner side of the engine nacelle 49 and a radially outer side of a core nacelle 50 to provide propulsive thrust. The intermediate pressure compressor 14 compresses the air flow directed into it before delivering that air to the high pressure compressor 15 where further compression takes place. A ratio of air entering the engine core (i.e. the intermediate pressure compressor 14) to air bypassing the core defines an engine bypass ratio (i.e. mass flow of air flow B divided by mass flow of air flow A). In this example, the bypass ratio is approximately 10. It has been found that at bypass ratios of approximately 10 or greater, the invention is particularly effective, though it will be understood that the invention is also applicable to engines having lower bypass ratios.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shafts. The compressors 14, 15, combustor 16 and turbines 17, 18, 19 are housed within the core nacelle 50. The core nacelle 50 defines a core inlet 38 at an axially forward end, and a core exhaust 23 at an axially rearward end.

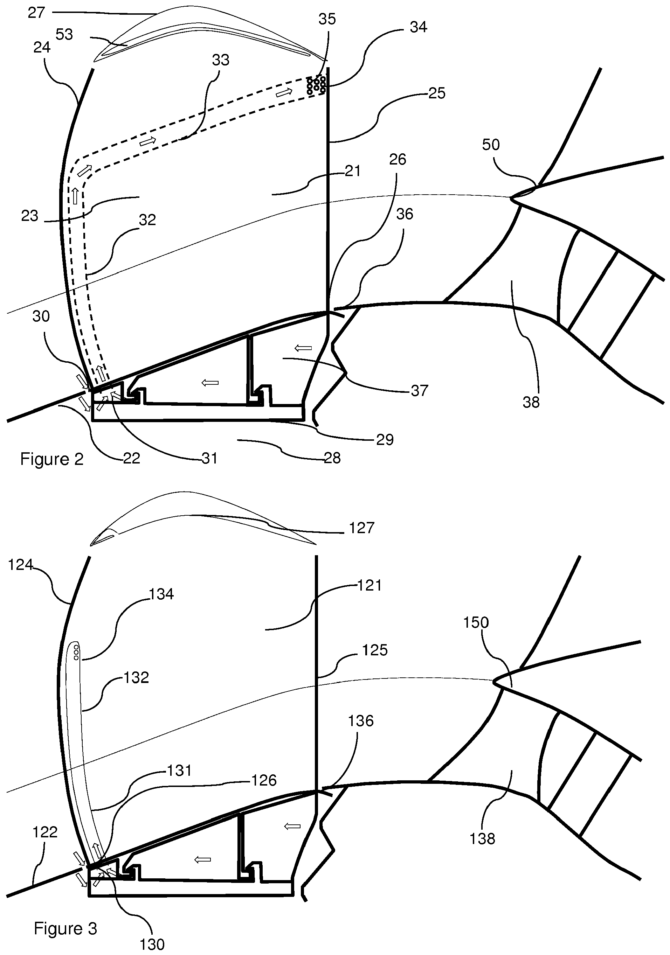

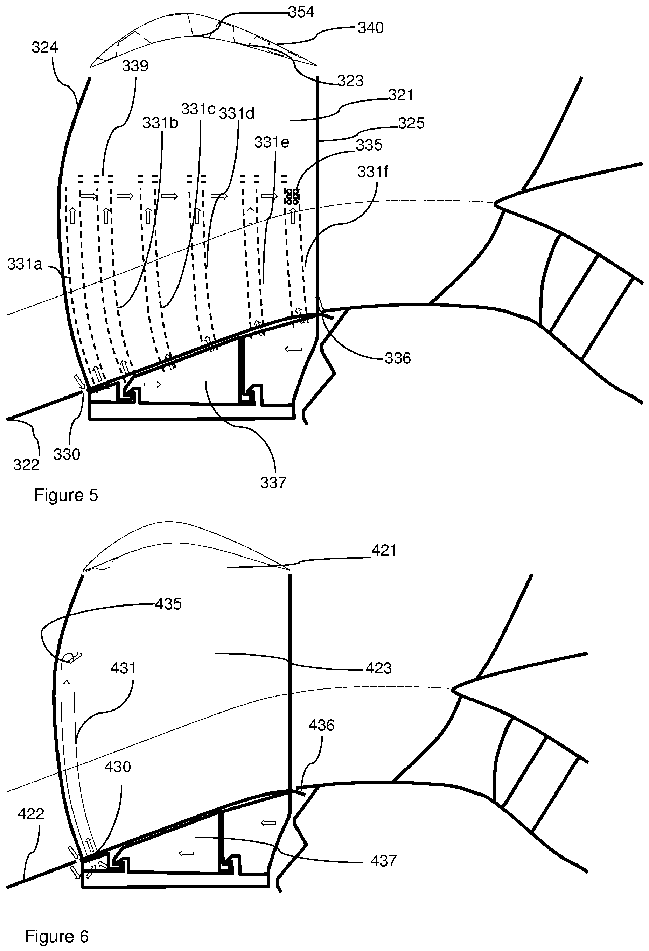

Figure 2 shows a first fan assembly. The fan 13 comprises a plurality of rotor blades 21 which radially project from the hub 22. The hub 22 and fan blades 21 together for a fan assembly. The hub 22 comprises a generally conical outer surface, which increases in diameter from a tip 23 at an axially forward end of the engine 10, to a maximum diameter adjacent the core inlet 38. Each fan blade 21 comprises a pressure surface 23, a suction surface 40 (shown in figure 6) on an opposite side, a leading edge 24, a trailing edge 25, a root 26 and a tip 27. The blade 21 extends generally radially from the root 26 to the tip 27. A distance between the root 26 and tip 27 defines a span of the blade 21. A distance between the leading and trailing edges 24, 25 defines a chord of the blade 21. The blade 21 is of superplastically formed, diffusion bonded construction, having a hollow interior provided with a warren girder construction, as described for example in European patent application EP 1092485.

The hub 22 is mounted to a low pressure shaft 28, which is in turn attached to the low pressure turbine 19. Consequently, the hub 22 is driven by the low pressure turbine 19. The blades 21 are each attached to a fan disc 28 by a fir tree mounting arrangement 29. The fan disc 28 is in turn attached to the hub 22, such that they rotate together.

The hub 22 comprises a first inlet aperture 30 provided on an external, radially outer surface thereon. The inlet aperture 30 extends through the external surface of the hub 22 into the hollow exterior therein. The inlet aperture 30 communicated with a passage 31 provided in the blade 21. The passage 31 extends from a radially inner end radially inwardly of the aerodynamic root 26, and radially outwardly of the fir tree mounting arrangement 29 within a hollow interior 53 of the blade 21.

The passage 31 extends generally radially outwardly from the inlet 30 part way along the span of the blade 21. In the embodiment shown in figure 2, the passage 31 comprises a leading edge portion 32 which extends in a generally radial direction, adjacent the leading edge 24 of the blade 21. The passage 31 further comprises a generally chordwise portion 33, which extends from a radially outer end of the leading edge portion 32 in a generally chordwise direction, toward the trailing edge 25, though the chordwise portion 33 may still extend in a direction having a radial component. The chordwise portion 33 extends to an outlet 34 located adjacent the trailing edge 25 at a radial position adjacent the tip 27. The outlet 34 communicates with the main fan flow. The outlet 34 comprises a plurality of holes 35. The outlet 34 is positioned radially outwardly of the inlet 30, and is in fluid communication with the passage 31 within the blade 21, and the inlet aperture 30. Consequently, the rotation of the blade 21 imparts centrifugal forces on the air within the passage 31, thereby raising the pressure of the air as the blade 21 rotates. Consequently, air is drawn in through the inlet 30, and exhausted at the outlet 34 via the passage 31. The outlet 34 is provided at a radial position such that the static pressure of the airflow emerging from the passage 31 at the outlet 34 exceeds the static pressure of the external fluid flow generated by the fan 13 at that radial position. As the skilled person will appreciate, this will depend on design details of the fan blade 21, and principally on the fan pressure ratio and fan rotational speed.

For example, a propulsive fan 13 for a passenger airliner may have a diameter D of 2.5m, a hub to tip ratio HTR of 0.3, and operate at a tip relative Mach number $M_{rel\_tip}$ of 1.3 with an axial Mach number $M_{ax}$ of 0.6.

At operating altitude the static temperature T and pressure P may be 240K and 28150Pa respectively, and the specific heat at constant pressure $c_p$ may be 1005 J/kg/K. The gas constant R for air is 287 J/kg/K, which gives the ratio of specific heats at constant pressure and volume y as 1.4. Depending on the design requirements, the fan 13 would typically produce a pressure ratio of between 1.3 and 1.6.

The fan rotational speed $\omega$ is thus:

$$\omega = \frac{V_{tip}}{R_{tip}} = \frac{M_{tip}(\gamma RT)^{\frac{1}{2}}}{\frac{D}{2}} = \frac{\left(\left(M_{tip_{rel}}^2 - M_{ax}^2\right)\gamma RT\right)^{\frac{1}{2}}}{\frac{D}{2}} = 286.5 \text{ rad/s}$$

The total temperature rises as a result of the work input to the flow up the passage in the blade. A design choice must be made as to what radial position along the blade 21 the outlet 34 will be provided. Let the radial position of the outlet 34 as a fraction of the fan diameter D be denoted as X, with values between HTR and 1.0 being possible. The total temperature rise may then be determined as:

$$T_{02} - T_{01} = \frac{\omega^2}{2c_p} \frac{D^2}{2} \left( X - HTR^2 \right)$$

The maximum temperature rise occurs at X=1.0, and is 58K for the example presented here.
The total temperature is:

$$T0_1 = T_1 (1 + \frac{\gamma - 1}{2} M_{ax}^2) = 257.3\text{K}$$

The total pressure is:

$$P0_1 = P_1 \left( 1 + \frac{\gamma - 1}{2} M_{ax}^2 \right)^{\frac{\gamma}{\gamma - 1}} = 35905\text{Pa}$$

The pressure ratio imparted by this work input process can be determined by compressible flow relationships:

$$\frac{P0_2}{P0_1} = \left( \frac{T0_2}{T0_1} \right)^{\frac{\gamma}{\gamma - 1}} = \left( \frac{T0_1 + (T0_2 - T0_1)}{T0_1} \right)^{\frac{\gamma}{\gamma - 1}} = 2.04$$

Consequently, in this example, the total pressure is 73197Pa, so the total pressure rise is ~37000Pa.
Clearly, the above numbers describe the maximum achievable pressure rise within the fan blade passage. In practice, a smaller fraction of the pressure rise may be chosen and pressure losses will be generated at entrance, exit and within the fan blade passage 32.
Once the cross sectional area of the passage 32 within the fan blade and the desired mass flow are chosen, the pressure losses may be determined as follows.
A typical fan 13 may have twenty-two blades 21 with a maximum thickness of less than 20mm. Let us assume a passage 32 with an area equivalent to a tube of half this diameter at d=10mm or area ~8×10⁻⁵ m². Using a relationship for the pipe friction F such as that of Holbrook:

$$F = \left( \frac{1}{-1.8 * LOG_{10} \left( \frac{6.9}{Re} + \left( \frac{\varepsilon/d}{3.7} \right)^{1.11} \right)} \right)^2$$

(With a representative roughness of 5×10⁻⁵ m and Reynolds number $Re = \frac{4\dot{m}}{\pi \mu d}$ ).

The pressure drop due to friction in the pipe can be derived as:

$$\Delta P_{fric} = \frac{FL\rho V^2}{2d} = \frac{F \frac{D}{2}(X - HTR)\rho V^2}{2d}$$

Additional pressure losses can be anticipated at the entrance and exit of the flow passage 32. These may be accounted as a loss coefficient applied to the dynamic pressure:

$$\Delta P_{loss} = k(P0 - P)$$

we will assume that all dynamic pressure at inlet is lost ($k_{in}$=1.0) and a further 10% in the exit process ($k_{ex}$=0.1). For a representative flow of 0.03% of the full flow, these pressure losses would match the 37000Pa pressure rise and allow a system capable of exhausting the flow at the tip 27 adjacent the leading edge 24. Increasing the available flow area within the fan blade 21 would increase the flow.

Taking a maximum possible area of the blade 21 as two triangles meeting at a maximum height at mid chord, a flow area increase of a factor of 20 and an associated flow increase up to 1.6% of the fan flow could be achievable.

Alternatively, using this maximum area, the 0.03% flow could be ejected at 30% of the blade height.

It will be understood that the invention could be applied to different diameter fans. For example, where the fan blades 13 have a diameter of 3 metres, then the flow would increase from 0.03% of full flow to 0.05% for the same diameter passages, in view of the increased pressure provided by the greater diameter. Similarly, for the maximum internal area case, the flow would increase from 1.65% of full flow to 2.1%. On the other hand, for a fan blade 21 having a diameter of 1 metre, 0.5% of the full flow could be provided using the whole internal area where the flow is ejected at the tip. Similarly, increasing the speed will also increase the available flow. For example, for the 2.5 metre fan blade diameter case, increasing the tip speed from Mach 1.3 to 1.5 will increase the flow from 0.03% to 0.05% for a single passage, or from 1.65% to 2.07% for the maximum available area case. On the other hand, reducing the tip speed to Mach 1.1 would reduce the flow from the single passage from 0.03% to 0.017% and would reduce the flow for the maximum area case from 1.65% to 1.25%.

The hub 22 further comprises a second inlet aperture 36 located adjacent the trailing edge 25 of the blade 21. The second inlet aperture 36 communicates with the first inlet aperture 30 via an inlet manifold 37 defined by a hollow region within the blade 21 between the aerodynamic root 26 and the fir tree mounting arrangement 29. Consequently, air is drawn from both the area adjacent the leading edge 24 of the blade 21, and the area adjacent the trailing edge 25 of the blade 21. Consequently, secondary flow adjacent the outer surface of the hub 22 is withdrawn, and so the air ingested into the engine core has less turbulence, thereby improving core performance.

Figure 3 shows a second fan assembly. The fan assembly is similar to that shown in figure 2, with a passage 131 provided within a fan blade 121 in communication with first and second inlet apertures 130, 136 provided in a hub 122. The passage 131 comprises a generally radially extending leading edge portion 132, which terminates in an outlet 134. The outlet 134 is located adjacent a leading edge 124 of the blade 121, and again comprises a plurality of holes. In view of the lower static pressure at the leading edge of the blade 121 compared to a trailing edge 125 of the blade 121, the outlet 134 can be located at a position closer to the root (i.e. radially inwardly) compared to the outlet 34 of the embodiment shown in figure 2. In this example, the outlet 134 is provided at a radial position corresponding to 30% of the fan blade 121 span (i.e. 30% of the distance from the aerodynamic root 126 to the tip 127). In view of the relatively high bypass ratio in this example engine, this corresponds to a radial position radially outward of the core nacelle 150, and so airflow from the outlet 134 is not ingested into the core inlet 138.

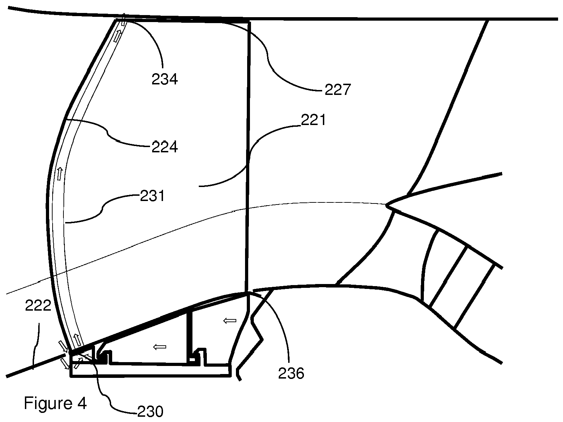

Figure 4 shows a third fan assembly. The fan assembly is similar to that shown in figure 3, with a passage 231 provided within a fan blade 221 in communication with first and second inlet apertures 230, 236 provided in a hub 222. The passage 231 comprises a generally radially extending leading edge portion 232, which terminates in an outlet 234. The outlet 134 is located adjacent a leading edge 224 of the blade 221. However, this embodiment differs from that of figure 3 in that the outlet 234 is provided at a tip 227 of the blade 221. In view of the position of the outlet 234 at the tip 227 of the blade 221, the pressure of the outlet flow is significantly greater at given conditions than the flow from the outlets 34, 134 of the embodiments shown in figure 2 and 3. Furthermore, the outlet flow provides sealing flow at the tip 227, thereby preventing flow from leaking between blade passages at the tip, which would otherwise form secondary flows at the tip, i.e. further turbulent flow. Consequently, the fan efficiency can be increased, or the tip gap can be enlarged without detrimentally affecting fan efficiency.

Figure 5 shows a fourth fan assembly. The fan assembly is similar to that shown in figure 4, with a first passage 331a provided within a fan blade 321 in communication with first and second inlet apertures 330, 336 provided in a hub 222 via an inlet manifold 337. The first passage 331a extends in a generally radial direction part way along the span of the blade 321 adjacent a leading edge 324 of the blade 321. The assembly further comprises second through sixth passages 331b-f, which are also in communication with the inlet apertures 330, 336 via the inlet manifold 337. The passages 331b-f also extend in a generally radial direction, parallel to the first passage 331a, and are spaced across the chord of the blade, with the sixth passage 331f being provided adjacent a trailing edge 325 of the blade 321, and the remaining passages 331b-e being spaced evenly in between. Due to the conical shape of the hub 322, a radially inner upstream end of the second passage 331b is provided radially outwardly of the radial inner upstream end of the first passage 331a. Similarly, the upstream ends of the third through sixth passages 331c-f are provided further radially outwardly in ascending order.

Each of the passages 331a-f terminates in a generally axially (i.e. chordally) extending outlet manifold 339 with which the passages 3311a-f are in fluid communication. The manifold 339 extends from substantially the leading edge 325 to the trailing edge 325 of the blade 321, and terminates in an outlet 335. The outlet 335 is located mid-way along the span of the blade 321, radially outwardly of the core inlet 38, adjacent the trailing edge 325. Consequently, the inlet apertures 330, 336 communicate with the outlet 335 via the inlet manifold 337, passages 331a-f and manifold 339 in flow sequence. Such an arrangement increases the internal space of the blade 21 used for the passages, and so increases the flow at the outlet 335. The passages 331a-f may be formed by spaces defined by an internal warren structure within the hollow blade 321. The warren structure comprises web members 354 which extend between the pressure and suction surfaces 323, 340 within the blade, to thereby providing internal bracing. The manifold 339 may comprise chordally extending apertures provided within the web members 354, to thereby interconnect the spaces.

Figure 6 shows a fifth fan assembly. The fan assembly is similar to that shown in figure 3, with a passage 431 provided extending radially along a fan blade 421 in communication with first and second inlet apertures 430, 436 provided in a hub 422 via an inlet manifold 437. The passage 431 is provided in the form of a blister (i.e. an external projection) on a pressure surface 423 of the blade 421, which terminates in an outlet 435 at a radially outer end thereof. Consequently, the invention can be applied to solid blades such as carbon fibre reinforced composite (CFRP) blades, or to thin fan blade having insufficient internal thickness to accommodate the necessary passage diameter for low pressure losses. Alternatively, the passage 431 could extend within a hollow fan blade, with the pressure surface 423 having a projection at the location of the passage, to accommodate a larger diameter passage 431. Consequently, the invention can be provided on solid blades.

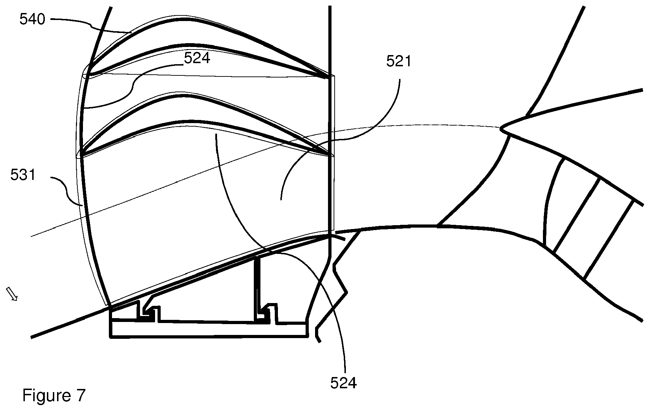

Figure 7 shows a sixth fan assembly. In this embodiment, a passage 531 is provided extending through a blade 521. The passage 531 is again provided as a blister, and extends over both a pressure surface 523, and a suction surface 540, and wraps around a leading edge 524. Consequently, a passage having a large internal cross sectional area can be provided, without requiring a large external projection on the blade 521.

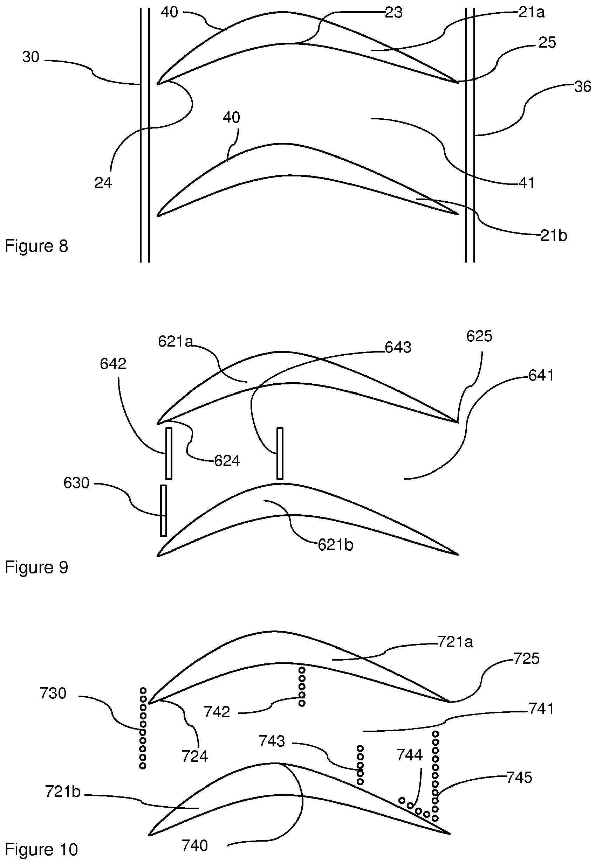

Figure 8 shows a top view of the arrangement of figure 2, looking down the span of the blade 21 from the tip 27 toward the root 26. Figure 8 shows two adjacent blades 21 a, 21 b of the fan assembly. An inter-blade passage 41 is defined by the circumferential space between the pressure surface 23 of blade 21 a and the suction surface 40 of blade 21 b. Further inter-blade passages are provided between adjacent blades 13 around the annulus of the hub 22. The inlet apertures 30, 36 each comprise circumferentially extending slots, which extend partly or wholly around the circumference of the hub 22 upstream and downstream respectively of the blades 13a, 13b.

Figure 9 shows a top view of a seventh fan assembly, looking down the span of a blade 521. In this arrangement, first 530, second 542 and third 543 inlet apertures are provided. Each of the apertures 530, 542, 543 communicates with a passage (not shown) similar to those of the previous embodiments, possibly via an inlet manifold (not shown). Each of the apertures 530, 542, 543 comprises a part circumferential slot. Each slot 530, 542, 543 is provided within an inter-blade passage 541 defined between adjacent blades 513a, 513b. The first slot 530 is provided adjacent the leading edge of the second blade 521 b, slightly downstream of a leading edge 524. The second slot 542 is provided slightly downstream of the first slot 530, adjacent the first blade 521 a. The third slot 543 is provided downstream of both of the first and second slots 530, 542 adjacent a mid-chord region of the second blade 521 b. Consequently, the third slot 443 captures secondary flow that has its origin on a streamline that does not pass over the first and second slots 530, 542. Figure 10 shows a top view of an eighth fan assembly, looking down the span of a blade 721. In this arrangement, first 730, second 742, third 743, fourth 744 and fifth 745 inlet apertures are provided. Again, each aperture communicates with one or more passages such as those shown in figures 2 to 5. Each aperture comprises a series of holes arranged in a row. Consequently, stresses are reduced in use relative to where the apertures comprise a slot. The first aperture 730 is provided upstream of a leading edge 724 of a first blade 721 a, and extends generally circumferentially across part of an inter-blade passage 741. The second aperture 742 is provided within the inter-blade passage 741 at a mid-chord point adjacent the first blade 721 a and again extends generally part circumferentially. The third aperture 743 is provided downstream of the second blade adjacent the second blade 721 b, and extends part circumferentially. The fourth aperture 744 is provided adjacent the second blade 721 b downstream of the second aperture 744, extends generally axially, following the curvature of a suction side 740 of the second blade 721b. Finally, the fifth aperture 745 is provided adjacent the trailing edge 725 of the second blade 721 b, and extends generally part circumferentially.

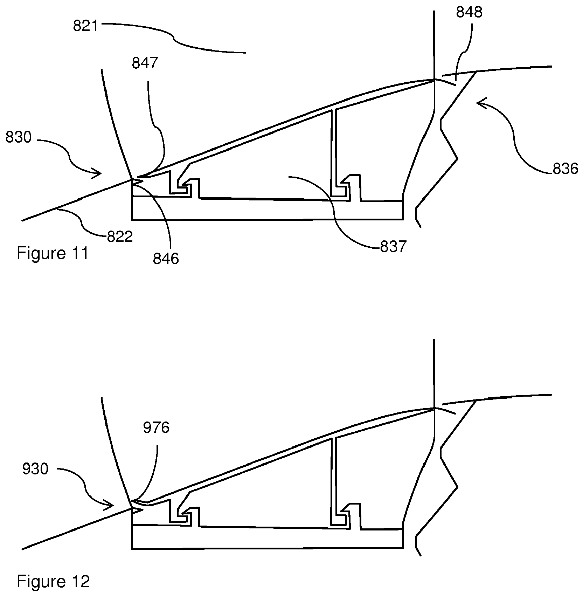

Figure 11 shows part of a ninth fan assembly, showing the cross sectional profile of inlet apertures 830, 836 provided in a hub 822, which again communicate with a passage (not shown) extending through a fan blade 821. The first aperture 830 comprises a first lip 846 at an upstream end, and a second lip 847 at a downstream end. A radially outer surface of the first lip 846 and a radially inner surface of the second lip 847 are shaped such that the inlet 830 extends into an inlet manifold 837 in a generally axial direction. Consequently, turning of the secondary flow as it enters the first inlet 830 is relatively low, thereby ensuring low pressure losses.

Similarly, the second aperture 836 comprises a first lip 848 at an upstream end, which projects radially inwardly toward the inlet manifold 837. Again, the lip 848 reduces turning of the flow into the inlet manifold 837.

Figure 12 shows a tenth fan assembly. The assembly is similar to that of the first assembly shown in figures 2, 8 and 11. However, a second lip 947 of a first aperture 930 projects radially outwardly into the main flow path and thereby helps capture secondary airflow, such that a greater proportion of the boundary layer is ingested.

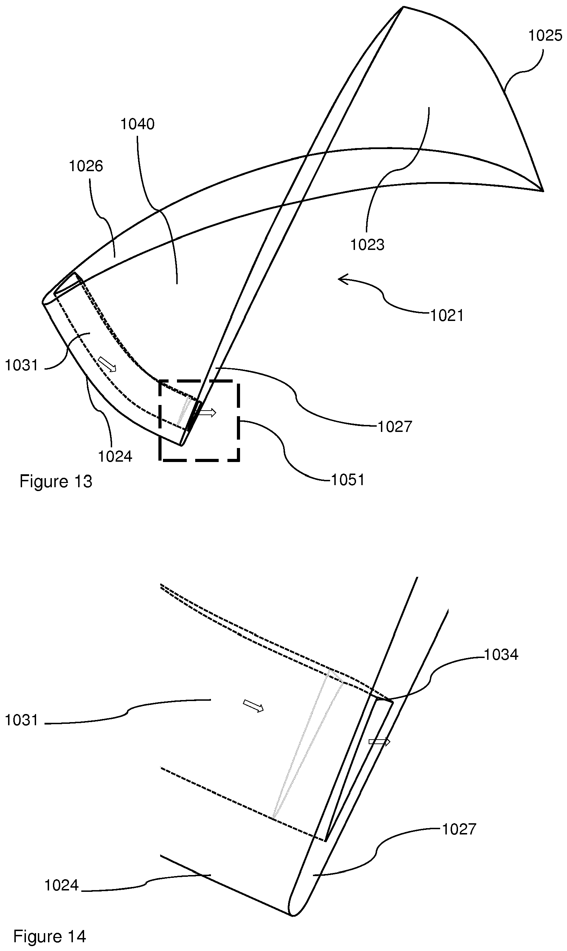

Figures 13 and 14 show a fan blade 1021 of an eleventh fan assembly. The fan blade 1021 comprises a pressure surface 1023, a suction surface 1040 on an opposite side, a leading edge 1024, a trailing edge 1025, a root 1026 and a tip 1027. The blade extends generally radially from the root 1026 to the tip 1027. The blade 1021 comprises a radially extending passage 1031 which extends from an inlet at the root 1026 to an outlet 1034 at the tip 1027. The passage 1031 extends within a hollow portion of the blade, adjacent the leading edge 1024.

Figure 14 shows a close up of a tip region 1051 illustrated in figure 13, and shows the outlet 1034 in more detail. The outlet 1034 emerges from the pressure side 1023 of the blade 1021, and is angled in a circumferential direction, such that the outlet 1034 is configured to direct air from the outlet 1034 away from the pressure side 1023 of the blade 1021, toward the suction side of an adjacent blade (not shown).

Consequently, this arrangement will oppose over-tip leakage, which otherwise tends to flow from the pressure side 1023 to the suction side 1040 of the blade 1021 at the tip 1024 in use. Such leakage will normally result in reduced fan efficiency. Consequently, by reducing over-tip leakage, fan efficiency can be increased. Alternatively or in addition, since fan leakage is related to the gap between the fan blade tip 1024 and the inner radius of the nacelle, this tip gap can be increased for a given fan tip leakage flow, leading to lower manufacturing costs.

It will be understood that the inlet apertures of any of figures 8 to 12 could be applied to any of the arrangements shown in figures 2 to 7 and 13 to 14.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, the blade could be of carbon fibre construction, optionally comprising a metallic leading edge. In this case, the passage could be provided within a hollow metallic leading edge, or within a space defined by the join between the metallic leading edge and the main carbon fibre body.

It will be understood that the drawings are not to scale.

## Claims

1. A fan assembly for a gas turbine engine (10), the assembly comprising:

   a hub (22) and a plurality of blades (21) projecting from the hub (22);
   wherein the hub (22) comprises an inlet aperture (30) located adjacent a blade root (26), the inlet aperture (30) being in fluid communication with a passage (31) extending along at least part of a span of the blade (21), wherein the passage (31) communicates with an outlet (34) provided on an exterior of the blade (21), radially outwardly of the inlet (30).

2. An assembly according to claim 1, wherein the inlet (30) is provided adjacent one or both of the leading (24) and the trailing edge (25) of the blade root (26).

3. An assembly according to claim 2, wherein a first inlet (30) is located axially forwardly of the leading edge (24) of one or more blades (21) at a circumferential position of the leading edge (24).

4. An assembly according to claim 2 or claim 3, wherein a second inlet (36) is provided in an inter-blade passage (41) defined by opposing surfaces (23, 40) of adjacent blades (21 a, 21 b), and the second inlet (36) may be provided downstream of a trailing edge (25) of the blades (21 a, 21 b).

5. An assembly according to any of the preceding claims, wherein the or each inlet (30, 36) and / or the or each outlet (34) comprises either or both of one or more annular slots (30, 36), and a plurality of holes (730, 742, 743, 744, 745) arranged in a generally circumferential extending row.

6. An assembly according to any of the preceding claims, wherein the outlet (34) is provided at a radial position such that, in use, air exiting from the outlet has a static pressure exceeding the static pressure of external air flow at the outlet (34).

7. An assembly according to any of the preceding claims, wherein the passage (31) extends in a generally radial direction, and the outlet (34) is provided adjacent a tip of the blade.

8. An assembly according to any of the preceding claims, wherein the outlet (134) is provided adjacent a leading edge (132) of the respective blade (121), and may be provided at a pressure surface of the respective blade (121).

9. An assembly according to any of claims 1 to 8, wherein at least a portion (33) of the passage (31) extends at least partially in an axial direction, and the outlet (34) is provided at a trailing edge (25) of the respective blade (21).

10. An assembly according to any of the preceding claims, wherein each respective blade (21) comprises a plurality of radially extending passages (331a-f) in fluid communication with the or each inlet (330), and wherein the radially extending passages (331a-f) may communicate with an axially extending outlet manifold (339).

11. An assembly according to any of the preceding claims, wherein the blades (21) comprise one or more of aluminium, titanium alloy and a composite material such as carbon fibre reinforced plastic, and wherein where the blades comprise aluminium alloy the blades (21) may be formed by a superplastic diffusion bonding process.

12. An assembly according to any of the preceding claims, wherein the passage (31) extends either within a hollow interior (53) of the respective blade (21) between the pressure (23) and suction (40) surfaces, or comprises a blister (531) located on a surface of the blade (521), which blister (531) may extend from the pressure surface of the blade (521), and may extend from both the pressure and suction surface (540) of the blade (521).

13. An assembly according to claim 11, wherein the blade (521) comprises a carbon fibre reinforced plastic main body joined to a metallic leading edge (524), and the passage (531) is located within one of the metallic leading edge (524), the main body, and the join between the leading edge and main body.

14. An assembly according to any of the preceding claims, wherein at least one of the inlets (830) comprises an inlet passage extending in a substantially axial direction, and wherein at least one of the inlets may comprise a vane (847) which may project from the hub (822) to guide air into the inlet (830).

15. An assembly according to claim 4 or any claim dependent thereon, wherein the arrangement comprises an inlet manifold (37) located within the blade hub (22), the inlet manifold (37) being in fluid communication with the first and second inlets (30, 36) and at least one passage (31).

16. A gas turbine engine (10) comprising a fan assembly in accordance any of the preceding claims.

Figure 1

Figure 2

Figure 3

234

227

224

221

231

222

236

Figure 4

230

Figure 5

Figure 6

Figure 7

Figure 8

Figure 9

Figure 10

Figure 11

Figure 12

Figure 13

Figure 14

Europäisches
Patentamt

European
Patent Office

Office européen
des brevets

# EUROPEAN SEARCH REPORT

Application Number

EP 17 15 8641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | GB 2 528 116 A (BANNERMAN DAVID CAMPBELL [GB]) 13 January 2016 (2016-01-13)<br>* page 6, last paragraph - page 8, paragraph 1; figures 1a,1b *<br>* page 10, paragraph 4 - page 11, paragraph 1; figures 4,5a,5b * | 2,3,5-9, 12,16<br>4,10,11, 13-15 | INV.<br>F04D19/02<br>F01D5/14<br>F04D29/32<br>F04D29/68 |
| Y<br><br>A | FR 1 002 324 A (AMELIORAIR S.A.) 5 March 1952 (1952-03-05)<br>* page 1, left-hand column, paragraph 1 *<br>* page 3, left-hand column, paragraph 6 - paragraph 8; figure 5 * | 4,15<br><br>1-3,5-7, 12,16 | |
| A | FR 592 393 A (FERRIANI, GAETANO) 1 August 1925 (1925-08-01)<br>* page 1, line 53 - page 2, line 12; claims 1,2; figures 1,2 * | 1-3,5-9, 12,15 | |
| Y<br><br>A | US 3 735 593 A (HOWELL A) 29 May 1973 (1973-05-29)<br>* column 1, line 50 - column 2, line 22; figure 1 *<br>* column 3, line 26 - line 36; figure 4 * | 4,14<br><br>1-3,5, 12,16 | TECHNICAL FIELDS SEARCHED (IPC)<br><br>F04D<br>F01D<br>B64C |
| Y<br><br>A | EP 1 878 872 A2 (GEN ELECTRIC [US]) 16 January 2008 (2008-01-16)<br>* paragraph [0015] - paragraph [0016]; figure 3 * | 10,11, 13,15<br>1 | |

The present search report has been drawn up for all claims

| Place of search | Date of completion of the search | Examiner |
|---|---|---|
| Munich | 7 July 2017 | Di Giorgio, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 8641

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2017

| Patent document cited in search report | | Publication date | Patent family member(s) | | Publication date |
|---|---|---|---|---|---|
| GB 2528116 | A | 13-01-2016 | NONE | | |
| FR 1002324 | A | 05-03-1952 | NONE | | |
| FR 592393 | A | 01-08-1925 | NONE | | |
| US 3735593 | A | 29-05-1973 | GB | 1291943 A | 04-10-1972 |
| | | | US | 3735593 A | 29-05-1973 |
| EP 1878872 | A2 | 16-01-2008 | CN | 101105183 A | 16-01-2008 |
| | | | EP | 1878872 A2 | 16-01-2008 |
| | | | JP | 5235327 B2 | 10-07-2013 |
| | | | JP | 2008019856 A | 31-01-2008 |
| | | | US | 2008014095 A1 | 17-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1092485 A